# EUROPÄISCHE PATENTSCHRIFT

(11) **EP 1 561 920 B1**
(45) Veröffentlichungstag und Bekanntmachung des Hinweises auf die Patenterteilung: **09.08.2006**
(21) Anmeldenummer: 05000872.1
(22) Anmeldetag: 18.01.2005
(51) Int. Cl.: F01N 3/20, B01D 53/90

(54) **Flüssigkeitsbehälter**
Liquid tank
Réservoir de liquide

(30) Priorität: 06.02.2004 DE 102004005819
(43) Veröffentlichungstag der Anmeldung: 10.08.2005
(73) Patentinhaber: MAN Nutzfahrzeuge Aktiengesellschaft, 80995 München (DE)
(72) Erfinder: Beck, Klaus, Dipl.-Ing., 82216 Gernlinden (DE); Martin, Gerhard, Dipl.-Ing., 81379 München (DE); Häberle, Hartmut, 81247 München (DE)

(56) Entgegenhaltungen:
- EP-A- 1 199 449
- DE-A1- 19 723 114
- US-A1- 2002 081 239

## Beschreibung

Die Erfindung betrifft einen Flüssigkeitsbehälter für eine wässrige Harnstofflösung nach dem Oberbegriff des Patentanspruches 1.

Aus EP 0 555 746 A1 ist es bekannt, aus einem Flüssigkeitsbehälter eine wässrige Harnstofflösung einer Hydrolyseeinrichtung zuzuführen, in welcher der Harnstoff in Ammoniak (NH₃) und Kohlendioxid (CO₂) zersetzt wird. Das Gasgemisch aus NH₃ und CO₂ wird dem Abgas einer Brennkraftmaschine, insbesondere eines Dieselmotors zugeleitet und in einem Reduktionskatalysator findet eine NOₓ-Reduktion statt. Hierdurch wird die Bereitstellung und Lagerung von Ammoniak in Druckgasbehältern am Fahrzeug mit den dazu erforderlichen Sicherheitsvorkehrungen vermieden.

Bei tiefen Außentemperaturen kann die wässrige Harnstofflösung im Behälterinnenraum gefrieren. Dadurch entsteht die Gefahr der Beschädigung des Behälters aufgrund der Volumenvergrößerung der gefrorenen Harnstofflösung.

Aufgabe der Erfindung ist es daher, einen Flüssigkeitsbehälter der eingangs genannten Art zu schaffen, mit welchem eine sichere Bereitstellung der wässrigen Harnstofflösung gewährleistet wird.

Die Aufgabe wird erfindungsgemäß durch die kennzeichnenden Merkmale des Patentanspruches 1 gelöst.

Bei dem erfindungsgemäßen Flüssigkeitsbehälter weist der Behälterinnenraum ausgehend von seiner Bodenwand ein nach oben zu seiner Deckenwand hin sich erweiterndes Füllvolumen für die Harnstofflösung auf.

Hierzu können die den Behälterinnenraum begrenzenden Seitenwände eben ausgebildet sein, wobei wenigstens eine der beiden Seitenwände zur Erweiterung des Füllvolumens nach oben hin schräg verläuft. Der quer zur Behälterlängsausdehnung liegende Querschnitt des Behälterinnenraumes ist trapezförmig ausgebildet, wobei je nach den Einbauverhältnissen, welche stationär und bevorzugt bei einem Nutzfahrzeug, wie Omnibus, Lastkraftwagen und dergleichen zur Anwendung kommen kann, eine Seitenwand vertikal verläuft und die andere Seitenwand schräg gegenüber der Vertikalen verläuft. Wenn es die Einbauverhältnisse erlauben, können auch beide Seitenwände schräg verlaufen und beispielsweise im Querschnitt ein gleichschenkeliges Trapez mit der Bodenwand und der Deckenwand bilden.

In bevorzugter Weise sind die beiden Seitenwände sowie die Bodenwand und die Deckenwand des Behälters aus einem Stück, insbesondere aus einem Rohrprofil gebildet. Auf diese Weise erreicht man in einfacher Weise durch entsprechendes Ablängen aus beispielsweise einem Extrusions- oder Strangpressprofil unterschiedliche, den Einbauverhältnissen angepasste Behälterlängen. Insbesondere bei Nutzfahrzeugen, wie Lastkraftwagen, erreicht man für den zusätzlichen Harnstoffbehälter eine raumsparende und den Einbauverhältnisse angepasste Behälterform, die, wie im einzelnen noch erläutert wird, auch bei niedrigen Außentemperaturen eine sichere Bereitstellung der Harnstofflösung gewährleistet.

Beim Gefrieren der Harnstofflösung erfolgt die Abkühlung von Außen nach Innen. Hierbei entweicht ein Teil des Harnstoffs in den noch flüssigen Teil der Harnstofflösung als Kristalle. Diese Kristalle bilden mit dem noch nicht gefrorenem Harnstoff-Wassergemisch eine zähere Flüssigkeit, die zwar beim gleichen Gefrierpunkt (z. B. -11,5 °C) gefriert, aber mit Kristallen durchsetzt ist und somit eine gelartige Masse bildet.

Bei einem weiteren Gefrieren, wenn also die gelartige Masse auch gefriert, erfolgt eine erhebliche Volumenvergrößerung. Die genannte erhebliche Volumenvergrößerung wird auch "Ausblühen" genannt und erfolgt etwa im Bereich des Wärmemittelpunktes, also in dem Bereich, in dem sich Restwärme am längsten hält. Im Falle des erfindungsgemäßen Behälters erfolgt das Ausblühen in einem Bereich links und rechts der Längsmittellinie des Behälters.

Durch die Erfindung wird im Behälterinnenraum nach oben hin ein erweiterter Raum geschaffen, in dem sich die gefrorene Harnstoff-Wasserlösung beim Gefriervorgang ausdehnen kann. Aufgrund der schlanken Ausbildung des Behälterinnenraums wird das eingeschlossene Volumen, insbesondere im unteren Bereich relativ klein gehalten. Durch das im Behälterinnenraum sich nach oben hin erweiternde Füllvolumen, insbesondere durch die trapezförmige Querschnittsform des Behälterinnenraums wird ein Festsetzen oder Einzwängen der sich bildenden Eisschicht verhindert.

Vorzugsweise kann zur Verringerung des eingeschlossenen Volumens der Behälterinnenraum durch eine sich in Behälterlängsausdehnung erstreckende Trennwand in zwei miteinander kommunizierende Kammern unterteilt sein. Die genannte Trennwand ist nur im Rohrprofil ausgebildet, so dass die Flüssigkeit über die Endkappen Verbindung hat.

Im Falle des Einfrierens der Flüssigkeit hat dies den Vorteil, dass das Eis in zwei Blöcke geteilt ist und diese zwei Blöcke nicht den hohen mechanischen Zusammenhalt haben wie ein einzelner Block. Weiterhin erreicht man, dass das ohnehin schon schlanke Profil des Behälterinneren noch einmal unterteilt ist und die in den beiden voneinander getrennten Kammern vorhandenen Eiskörper sich im wärmsten Bereich, d. h. längs der Behältermitte, in welcher die Trennwand verläuft, nicht schließen kann. Vorzugsweise besitzen die beiden Kammern im wesentlichen gleiche Volumina.

Ferner kann in der Bodenwand eine Heizleitung vorgesehen sein, welche vorzugsweise von der Kühlflüssigkeit des Kühlsystems der Brennkraftmaschine beheizt wird. Weitere Heizleitungen können auch in den Seitenwänden und/oder in der Deckenwand vorgesehen sein.

Das Behältervolumen darf nie voll befüllt werden, vielmehr ist nur eine Befüllung von max. 80 % bis 85 % vorzusehen. Dies kann z. B. mit einer automatischen Abschaltung einer Zapfpistole erreicht werden.

Es zeigt
Fig. 1 in perspektivischer Darstellung und zusammengebautem Zustand ein erstes Ausführungsbeispiel;
Fig. 2 in Explosionsdarstellung das in Fig. 1 dargestellte Ausführungsbeispiel;
Fig. 3 eine Seitenansicht eines weiteren Ausführungsbeispiels; und
Fig. 4 eine schnittbildliche Darstellung des Ausführungsbeispiels der Fig. 3 entlang der Schnittlinie IV-IV.
Fig. 5 mögliche Ausführungen von Füllstandssensoren.

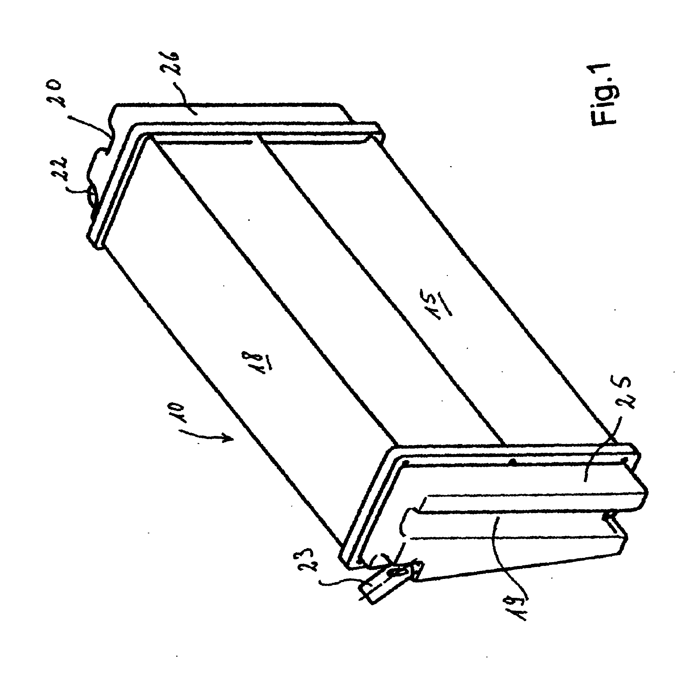

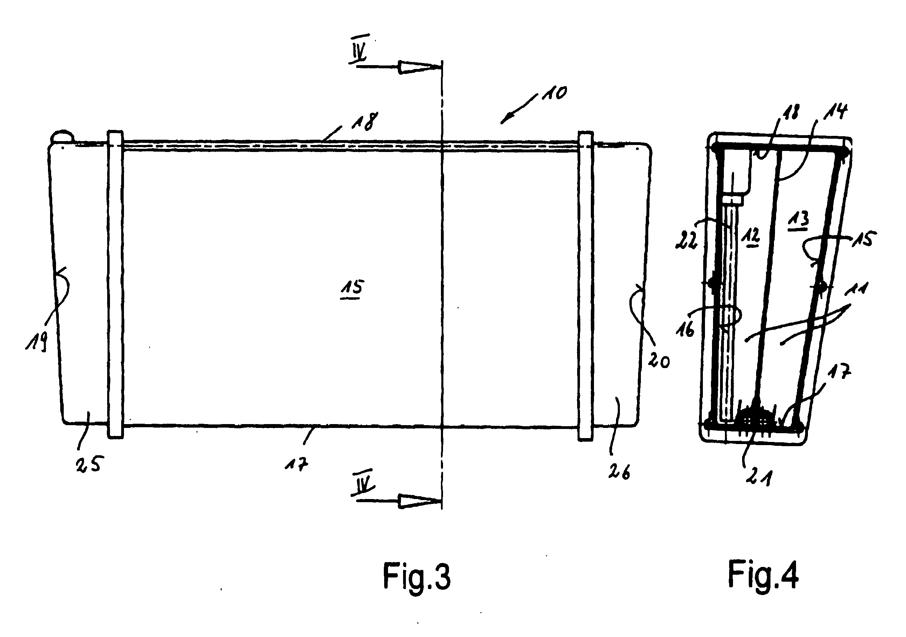

In den Figuren 1 bis 4sind Flüssigkeitsbehälter 10 dargestellt, welche Ausführungsbeispiele der Erfindung sind. Die Flüssigkeitsbehälter 10 umfassen einen Behälterinnenraum 11, welcher von zwei Seitenwänden, 15, 16, einer Deckenwand 18, einer Bodenwand 17 und zwei stirnseitigen Endwänden 19, 20 umschlossen wird. Der Behälterinnenraum ist in der Weise ausgebildet, dass er einen nach oben hin, d. h. zur Deckenwand 18 hin, sich erweiterndes Füllvolumen für die Harnstofflösung aufweist. Aus Fig. 4 ist zu ersehen, dass im Querschnitt der Behälterinnenraum 11 eine Trapezform aufweist, die im Bereich der Bodenwand 17 ihren schmalen Bereich aufweist und im Bereich der Deckenwand 18 erweitert ist. Bei den dargestellten Ausführungsbeispielen verläuft die Seitenwand 16 im wesentlichen senkrecht, d. h. im rechten Winkel zu der Bodenwand 17 und der Deckenwand 18. Die andere Seitenwand 15 verläuft schräg, so dass sich, wie schon erläutert, der umschlossene Behälterinnenraum 11 nach oben hin erweitert. Die Seitenwände 15, 16 sowie die Bodenwände 17 und die Deckenwand 18 sind eben ausgebildet. Wie aus den Figuren zu ersehen ist, erreicht man hierdurch ein schlankes Querschnittsprofil des Harnstoffbehälters, der sich vor allem zum raumsparenden Einbau in Nutzfahrzeugen eignet.

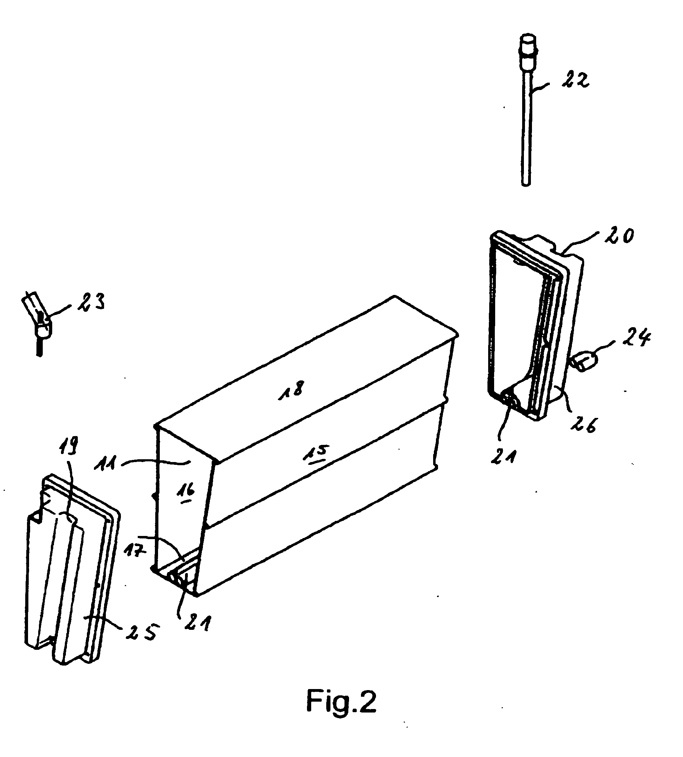

Wie insbesondere aus Fig. 2 zu ersehen ist, können die beiden Seitenwände 15, 16, die Bodenwände 17 und die Deckenwand 18 aus einem Stück, insbesondere aus einem Rohrprofil gebildet sein. Das Rohrprofil kann ein Strangpress- oder Extrusionsprofil sein. Vorzugsweise besteht das Rohrprofil aus Kunststoff, insbesondere Polyethylen (PE). Das für den Flüssigkeitsbehälter 10 verwendete Rohrprofilstück wird vorzugsweise aus einem langen extrudierten oder stranggepressten Rohrprofil abgelängt.

An den beiden Stirnseiten des Rohrprofils sind Endkappen 25, 26 beispielsweise durch Kleben, Schweißen oder durch Schrauben befestigt. An den Innenseiten der Endkappen 25, 26 werden die beiden Endwände 19, 20 gebildet, die den Behälterinnenraum 11 stirnseitig begrenzen. Die beiden Endkappen 25, 26 können im Spritzguss hergestellt sein und ebenfalls aus Kunststoff, insbesondere Polyethylen bestehen. Vorzugsweise sind die beiden Endkappen 25, 26 spiegelgleich ausgebildet.

An den beiden Endkappen 25,26 können Aufnahmeeinrichtungen für Versorgungsanschlüsse und Messanschlüsse, beispielsweise für eine Befülleinrichtung 23 und einen Füllstandssensor 22, der eine Entnahmeeinrichtung 27 beinhaltet, vorgesehen sein. Bei Widerstands-Füllstandssensoren müssen beide Endkappen 25,26 jeweils einen Füllstandssensor 22 aufweisen. Weiterhin ist es denkbar, dass jede Endkappe 25,26 eine Befülleinrichtung 23 aufweist, damit eine Vereinheitlichung der Endkappen 25,26 erreicht wird.

Bei dem in der Fig. 3 dargestellten Ausführungsbeispiel sind die beiden Endwände 19, 20, welche den Behälterinnenraum 11 stirnseitig begrenzen, erkennbar schräg angeordnet, so dass das Volumen des Behälterinnenraums vom Boden ausgehend sich nach oben hin, wie bei den Seitenwänden 15, 16, erweitert.

Ferner kann der Behälterinnenraum 11 durch eine in Behälterlängsrichtung verlaufende Trennwand 14 in zwei Kammern 12, 13 mit im wesentlichen gleichen Volumina unterteilt sein (Fig. 4). Diese Trennwand 14 kann auch bei dem in den Fig. 1 und 2 dargestellten Ausführungsbeispiel vorgesehen sein. Durch die Trennwand wird gewährleistet, dass sich im Behälterinnenraum 11 zwei getrennte Eiskörper beim Gefrieren ausbilden, die im wärmsten Bereich, d. h. in der Behältermitte, in welcher die Trennwand 14 verläuft, sich nicht schließen können.

Es ist auch denkbar, dass zwei Trennwände vorgesehen sind, die zueinander auch wieder die trapezförmige Aufweitung nach oben hin aufweisen.

Ferner befindet sich im Bereich der Bodenwand 17 eine Heizleitung 21. Bei den dargestellten Ausführungsbeispielen sind zwei Heizungsrohre vorgesehen. Die beiden Rohre sind über eine Rohrumlenkung 24, welche an der Endkappe 26 vorgesehen ist, miteinander verbunden. Im Bereich der Endkappe 25 befindet sich der Zufluss und der Abfluss für das Heizmedium. Das Heizmedium kann von der Kühlflüssigkeit des Kühlsystems der Brennkraftmaschine, beispielsweise des Dieselmotors gebildet werden. Hierzu ist die Heizleitung 21 an das Kühlsystem der Brennkraftmaschine angeschlossen. Auch in den Seitenwänden 15, 16 können gegebenenfalls Heizleitungen vorgesehen sein, die dann vorzugsweise an der Außenseite der Seitenwände 15, 16 verlaufen können.

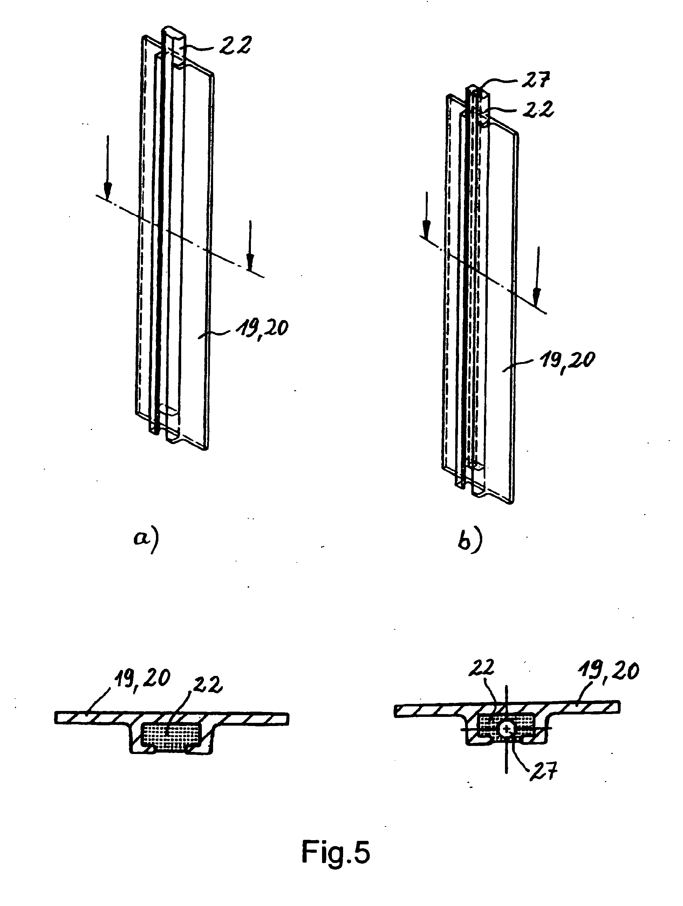

In der Fig. 5 ist ein Beispiel für die Anordnung eines Füllstandssensors 22 und eines Füllstandssensors 22 mit Entnahmeleitung 27 dargestellt. In den beiden spiegelbildlichen Endkappen 25,26 des Harnstoffbehälters 10 sind in den stirnseitigen Endwänden 19,20 bevorzugt vertikale Nuten vorgesehen, in die jeweils ein elastischer Sensor 22 für die Füllstandsmessung oder ein Sensor 22 mit einer Entnahmeleitung 27 eingeknüpft oder eingeklebt werden kann.

Dadurch wird durch den Sensor 22 die Nut völlig angefüllt. Ein Hinterwandern von Flüssigkeit wird damit praktisch nicht mehr möglich, so dass der Sensor 22, im Falle des Gefrierens der Flüssigkeit, nicht aus seiner Nut herausgedrückt werden kann.

Die im Beispiel Fig. 5b im Sensor 22 vorgesehene Entnahmeleitung 27 ist, weil das Sensormaterial elastisch ist, ebenfalls elastisch. Durch ein Einfrieren der Flüssigkeit in der Entnahmeleitung 27 wird die Entnahmeleitung 27 nicht beschädigt.

Der Füllstandssensor 22 besteht in vorteilhafter Weise aus einem elastischen, zähen Werkstoff, der zumindest auf der der Harnstofflösung zugewandten Seite elektrisch halbleitend ist. Beide Endwände 19,20 müssen für die Füllstandsmessung einen solchen Füllstandssensor aufweisen.

Wenn nun elektrische Spannung an die Sensoren 22 angelegt wird, ist der Gesamtwiderstand zwischen den Anlegestellen der Spannung auch abhängig von der Füllstandshöhe der Flüssigkeit.

Die Höhe des Gesamtwiderstandes ist ein Maß für die Füllstandsanzeige am Fahrerplatz.

### Bezugszeichenliste

- 10: Flüssigkeitsbehälter
- 11: Behälterinnenraum
- 12,13: Kammern
- 14: Trennwand
- 15,16: Seitenwände
- 17: Bodenwand
- 18: Deckenwand
- 19,20: stirnseitige Endwände
- 21: Heizleitung
- 22: Füllstandssensor
- 23: Füll- und Entnahmeeinrichtung
- 24: Rohrumlenkung
- 25,26: Endkappen
- 27: Entnahmeleitung

## Patentansprüche

1. Flüssigkeitsbehälter für eine wässrige Harnstofflösung, dessen Behälterinnenraum von zwei Seitenwänden, einer Deckenwand, einer Bodenwand und zwei stirnseitigen Endwänden zur Aufnahme der Harnstofflösung begrenzt wird, **dadurch gekennzeichnet, dass** der Behälterinnenraum (11) ausgehend von der Bodenwand (11) ein nach oben zur Deckenwand hin (18) sich erweiterndes Füllvolumen für die Harnstofflösung aufweist.

2. Flüssigkeitsbehälter nach Anspruch 1, **dadurch gekennzeichnet, dass** die den Behälterinnenraum (11) begrenzenden Seitenwände (15,16) eben ausgebildet sind und wenigstens eine der beiden Seitenwände (15,16) schräg verläuft.

3. Flüssigkeitsbehälter nach Anspruch 1 oder 2, **dadurch gekennzeichnet, dass** der quer zur Längsrichtung liegende Querschnitt des Behälterinnenraums (11) trapezförmig ausgebildet ist.

4. Flüssigkeitsbehälter nach einem der Ansprüche 1 bis 3, **dadurch gekennzeichnet, dass** die beiden Seitenwände (15,16), die Bodenwand (17) und die Deckenwand (18) aus einem Stück, insbesondere aus einem Rohrprofil gebildet sind.

5. Flüssigkeitsbehälter nach Anspruch 4, **dadurch gekennzeichnet, dass** das Rohrprofil ein Strangpress- oder Extrusionsprofil ist.

6. Flüssigkeitsbehälter nach einem der Ansprüche 1 bis 5, **dadurch gekennzeichnet, dass** das Rohrprofil durch eine in Behälterlängsrichtung verlaufende Trennwand (14) in zwei kommunizierende Kammern (12,13) geteilt sein kann.

7. Flüssigkeitsbehälter nach einem der Ansprüche 1 bis 6, **dadurch gekennzeichnet, dass** die beiden Endwände (19,20) an Endkappen (25,26) gebildet sind.

8. Flüssigkeitsbehälter nach einem der Ansprüche 1 bis 7, **dadurch gekennzeichnet, dass** wenigstens eine der beiden Endwände (19,20) schräg angeordnet ist.

9. Flüssigkeitsbehälter nach Anspruch 7 oder 8, **dadurch gekennzeichnet, dass** die Endkappen (25,26) spiegelgleich ausgebildet sind.

10. Flüssigkeitsbehälter nach einem der Ansprüche 7 bis 8, **dadurch gekennzeichnet, dass** die Endkappen (25,26) berührende Messanschlüsse (22) und Versorgungsanschlüsse (22,23,27) aufweisen.

11. Flüssigkeitsbehälter nach einem der Ansprüche 1 bis 10, **dadurch gekennzeichnet, dass** in oder an der Bodenwand (17) eine Heizleitung (21) vorgesehen ist.

## Claims

1. Fluid tank for an aqueous urea solution, the interior space of which fluid tank is designed for storing the urea solution and is limited by two side walls, one top wall, one bottom wall and two end walls, **characterised in that** the tank interior (11) for storing the urea solution expands from the bottom wall (11) towards the top wall (18).

2. Fluid tank according to Claim 1, **characterised in that** the side walls (15, 16) limiting the tank interior (11) are designed flat and that at least one of the two side walls (15, 16) extends obliquely.

3. Fluid tank according to Claim 1 or 2, **characterised in that** that cross section of the tank interior (11) which extends at right angles relative to the tank's longitudinal direction is of trapezoidal shape.

4. Fluid tank according to one of the Claims 1 to 3, **characterised in that** the two side walls (15, 16), the bottom wall (17) and the top wall (18) are made from one piece of material, particularly from a tube section.

5. Fluid tank according to Claim 4, **characterised in that** the tube section is an extruded section.

6. Fluid tank according to one of the Claims 1 to 5, **characterised in that** the tube section may be divided into two communicating chambers (12, 13) by a partition wall (14) extending in tank longitudinal direction.

7. Fluid tank according to one of the Claims 1 to 6, **characterised in that** the two end walls (19, 20) are integrated in the end caps (25, 26).

8. Fluid tank according to one of the Claims 1 to 7, **characterised in that** at least one of the two end walls (19, 20) is arranged obliquely.

9. Fluid tank according to one of the Claims 7 or 8, **characterised in that** the end caps (25, 26) are designed mirror-symmetrically.

10. Fluid tank according to one of the Claims 7 to 8, **characterised in that** the end caps (25, 26) feature measuring connections (22) and supply connections (22, 23, 27).

11. Fluid tank according to one of the Claims 1 to 10, **characterised in that** a heater pipe (21) is provided in or on the bottom wall (17).

## Revendications

1. Réservoir à fluide pouvant recevoir une solution d'urée aqueuse, dont l'espace intérieur est délimité par deux parois latérales, une paroi de plafond, une paroi de plancher et deux parois d'extrémité sur chacune des faces pour accueillir une solution d'urée, **caractérisé en ce que** l'espace intérieur du réservoir (11) présente un volume de remplissage partant de la paroi de plancher et s'étendant vers le haut jusqu'à la paroi du plafond (18) pour la solution d'urée.

2. Réservoir à fluide selon la revendication 1, **caractérisé en ce que** les parois latérales (15, 16) délimitant l'espace intérieur du réservoir (11) sont formées de manière plane, et au moins une des deux parois latérales (15, 16) est montée de biais.

3. Réservoir à fluide selon la revendication 1 ou 2, **caractérisé en ce que** la section transversale se trouvant transversalement par rapport au sens longitudinal de l'espace intérieur du réservoir (11) est formée de manière trapézoïdale.

4. Réservoir à fluide selon l'une des revendications 1 à 3, **caractérisé en ce que** les deux parois latérales (15, 16), la paroi de plancher (17) et la paroi de plafond (18) sont formées en un seul morceau, en particulier à partir d'un profilé tubulaire.

5. Réservoir à fluide selon la revendication 4, **caractérisé en ce que** le profilé tubulaire est un profilé extrudé.

6. Réservoir à fluide selon l'une des revendications 1 à 5, **caractérisé en ce que** le profilé tubulaire peut être divisé en deux chambres communicantes (12, 13) par le biais d'une paroi de séparation (14) placée dans le sens longitudinal du réservoir.

7. Réservoir à fluide selon l'une des revendications 1 à 6, **caractérisé en ce que** les deux parois d'extrémité (19, 20) sont formées comme des recouvrements d'extrémité (25, 26).

8. Réservoir à fluide selon l'une des revendications 1 à 7, **caractérisé en ce qu'**au moins une des deux parois d'extrémité (19, 20) est disposée de biais.

9. Réservoir à fluide selon la revendication 7 ou 8, **caractérisé en ce que** les recouvrements d'extrémité (25, 26) sont formés de manière symétrique.

10. Réservoir à fluide selon l'une des revendications 7 à 8, **caractérisé en ce que** les recouvrements d'extrémité (25, 26) présentent des raccords de mesure (22) et des raccords électriques (22, 23, 27).

11. Réservoir à fluide selon l'une des revendications 1 à 10, **caractérisé en ce qu'**une conduite de chauffage est prévue dans ou sur la paroi de plancher.
